# EUROPÄISCHE PATENTSCHRIFT

(11) **EP 1 295 923 B1**
(45) Veröffentlichungstag und Bekanntmachung des Hinweises auf die Patenterteilung: **22.03.2006**
(21) Anmeldenummer: 01121750.2
(22) Anmeldetag: 19.09.2001
(51) Int. Cl.: C09D 171/00, D21H 19/44, C09D 7/00, B41M 5/00

(54) **Zusammensetzung zur Erhöhung der Porosität und Flüssigkeitsaufnahmekapazität einer Schicht**
Composition for improved porosity and liquid retention capability of a layer
Composition pour l'amélioration de la porosité et de la rétention de liquide d'une couche

(43) Veröffentlichungstag der Anmeldung: 26.03.2003
(73) Patentinhaber: Celfa AG, 6423 Seewen (CH)
(72) Erfinder: Wälchli, Peter C., 8825 Schönenberg (CH); Bürgler, Marc, 6430 Schwyz (CH); Varescon, Francois, 6440 Brunnen (CH)
(74) Vertreter: Blum, Rudolf Emil

(56) Entgegenhaltungen:
- EP-A- 0 541 477
- EP-A- 0 717 013
- EP-A- 1 016 545
- DE-A- 19 528 878
- US-A- 3 917 556
- US-A- 5 028 639
- DATABASE WPI Section Ch, Week 197444 Derwent Publications Ltd., London, GB; Class A82, AN 1974-76391V XP002186225 & JP 49 026511 A (KURARAY CO LTD), 9. März 1974 (1974-03-09)

## Beschreibung

Die vorliegende Erfindung betrifft eine Zusammensetzung, die geeignet ist in Schichtform auf einen Träger, insbesondere Papier, Folie, oder Textilien, aufgetragen zu werden und die sich nach Trocknung durch eine hohe Flüssigkeitsaufnahmekapazität auszeichnet.

Zusammensetzungen für quellbare Aufnahmeschichten auf Basis von Bindemitteln, wie z.B. Gelatine, Polyvinylalkohol und Polyvinylpyrollidon zur Aufnahme wasserbasierter Farbflüssigkeiten sind bekannt. Solche Aufnahmeschichten zeigen hohen Glanz und hohe Farbflüssigkeitaufnahmekapazität. Sie weisen jedoch den Nachteil auf, dass die Farbstoffe an der Oberfläche der Schicht oft unregelmässig verteilt werden und dadurch Schwankungen der Farbdichte, bezeichnet als "beading", verursachen. Weitere Nachteile sind die langen Trocknungszeiten frischer Ausdrucke, die z.B. bei Stapeldruck zum Farbübertrag auf die Rückseite des darüberliegenden Blattes führen. Ferner zeigen die auf solchen Materialien aufgebrachten Bilder hohe Anfälligkeit auf Verlaufen der Farben infolge von Wasserzutritt in die Schicht. Diese Nachteile sind durch die quellbaren Systeme und ihr physikalisches Verhalten bedingt.

Ebenfalls bekannt sind Zusammensetzungen für poröse Aufnahmeschichten, die hoch gefüllt sind mit traditionellen anorganischen oder organischen Füllstoffen und/oder Pigmenten. Diese Schichten haben bei einem Feststoffauftrag über 35-40 g/m² eine gute Wasserfestigkeit im Vergleich zu quellbaren Systemen und eine hohe Farbflüssigkeitsaufnahmekapazität, die zu kurzen Trocknungszeiten von darauf applizierten lösungsmittelhaltigen Farben führt. Zugleich aber zeigen solche Schichten eine schlechte Dimensionsstabilität (Curl, Cockling), die bei Verwendung von Blättern mit einer solchen Schicht in Druckgeräten mit Einzug zu Problemen beim Einzug der Blätter in solche Druckgeräte führen kann. Ein weiteres Problem ist die Tendenz solcher Zusammensetzungen zur Ausbildung rissiger Oberflächenstrukturen als Folge der Trocknung bei der Herstellung des beschichteten Materials. Durch Reduzierung des Feststoffauftrags unter 30-25 g/m² lassen sich die vorher erwähnten Probleme vermindern oder sogar eliminieren, aber die Aufnahmeschicht ist dann zu dünn, um die Anforderungen vieler Druckgeräte in bezug auf Tintenaufnahmevermögen und Trocknungszeit zu erfüllen. Ein weiterer Nachteil solcher poröser Systeme ist deren niedriger Glanzwert, der durch die Porengrösse der Schicht bestimmt wird. Solche Zusammensetzungen eignen sich deshalb nur für matte Oberflächen.

EP 1 016 545 offenbart ein Ink-Jet Bildaufnahme-Element mit mattem Oberflächenzustand und mit einer wasserabsorbierenden Schicht und einer Bildaufnahme-Schicht; es lehrt aber nicht, wie eine Schicht gestaltet werden könnte, die sich durch hohe Flüsigkeitsaufnahmekapazität und hochglänzende Oberfläche auszeichnet.

Aufgabe der Erfindung war deshalb die Bereitstellung einer Zusammensetzung, die sich - in Schichtform aufgetragen und getrocknet - durch eine hohe Flüssigkeitsaufnahmekapazität auszeichnet, die eine hochglänzende Oberfläche besitzt, und gleichzeitig hochporös ist, um bei niedriger Schichtdicke sehr kurze Trocknungszeiten und schnelles Einziehen der Flüssigkeit von der Oberfläche in die Schicht bei der Flüssigkeitsaufnahme zu erreichen. Inbesondere soll auch die gute Verarbeitbarkeit auf Druckgeräten sichergestellt sein.

Diese Aufgabe wurde gelöst durch das Farbaufnahmematerial gemäss Anspruch 1.

Überraschend wurde nämlich gefunden, dass eine Zusammensetzung, die
(i) mindestens einen Glykolether mit der Struktur (I) 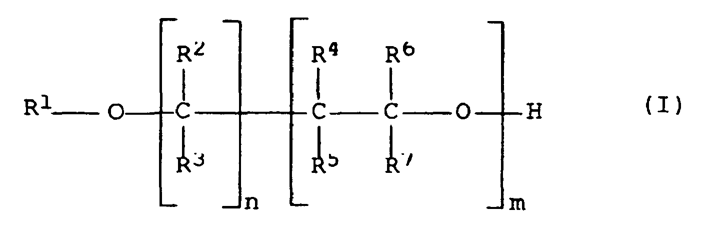 worin R¹, R², R³, R⁴, R⁵, R⁶, R⁷ unabhängig von einander H, einen Alkylrest, einen Phenylrest oder einen Benzylrest bedeuten und
   n = 0, 1 oder 2 und
   m = 1-10, insbesondere 1-5, speziell bevorzugt 1-3 sind, sowie
(ii) mindestens einen feinteiligen Füllstoff und/oder mindestens ein feinteiliges Pigment,
(iii) mindestens ein Bindemittel mit Hydroxylgruppen und/oder Carboxylgruppen und/oder Estergruppen, und
(iv) mindestens ein Lösungsmittel, wobei das Bindemittel im Lösungsmittel mindestens teilweise löslich ist und wobei das Lösungsmittel einen Siedepunkt unterhalb des Siedepunkts des Glykolethers der Formel (I) aufweist,
enthält, nach Trocknung, wobei bei dieser Trocknung mindestens 50 % des ursprünglichen Gehalts an Glykolether der Formel (I) entfernt wurden, eine Schicht mit signifikant höherer Porosität ergibt als eine Schicht aus einer Zusammensetzung, die keine Glykolether der Formel(I) enthält. Die Trocknung ist nicht weiter kritisch. Sie erfolgt üblicherweise während einer Zeit und bei einer Temperatur, die ausreichend sind um den Hauptteil, üblicherweise mindestens 90 Gew.-% des Lösungsmittels, vorzugsweise alles Lösungsmittel und mindestens einen Teil, vorzugsweise mindestens 50 Gew.-%, insbesondere mindestens 70 Gew.-% des Glykolethers der Formel (I) zu entfernen. Dies kann beispielsweise in einem Trocknungskanal bei Temperaturen im Bereich von 50°C-200°C während 1-4 Minuten erfolgen. So kann bei gleichbleibendem Füllstoff/Bindemittel-Verhältnis durch Zusatz von Glykolether(n) der Formel (I) die Porosität erhöht werden, oder es kann durch Zusatz von Glykolether(n) der Formel (I) bei Reduktion des Füllgrades gleiche Porosität erzielt werden wie bei höherem Füllgrad ohne Zusatz von Glykolether(n).

Im Rahmen der vorliegenden Erfindung werden Glykolether der Formel (I) nicht zu den Lösungsmitteln gezählt, sondern separat angeführt. Geeignete Lösungsmittel im Rahmen der vorliegenden Erfindung sind insbesondere ein oder mehrere polare Lösungsmittel, insbesondere Lösungsmittel ausgewählt aus der Gruppe umfassend einen Alkohol oder eine Mischung von Alkoholen, Mischungen von einem oder mehreren Alkoholen mit Wasser und insbesondere Wasser. Die Lösungsmittel sollen ferner in der Lage sein das Bindemittel mindestens teilweise, vorzugsweise vollständig zu lösen und einen Siedepunkt unterhalb des Siedepunktes des Glykolethers der Formel (I) aufweisen.

Zusätzlich können in der erfindungsgemässen Zusammensetzung weitere Bestandteile vorhanden sein wie insbesondere Netzmittel und/oder Farbstoff-Fixierungsmittel und/oder Vernetzungsmittel.

Üblicherweise enthalten erfindungsgemässe Zusammensetzungen Feststoffe, insbesondere Bindemittel und Füllstoffe und/oder Pigmente, in Mengen von 8 bis 40 Gew.-%, vorzugsweise 10 bis 30 Gew.-%, speziell bevorzugt 12 bis 25 Gew.-%, und flüssige Bestandteile, insbesondere Glykolether der Formel (I) und Lösungsmittel, in Mengen von 92 bis 60 Gew.-%, vorzugsweise 90 bis 70 Gew.-%, speziell bevorzugt 88 bis 75 Gew.-%. Das Verhältnis von Lösungsmittel zu Glykolether der Formel (I) beträgt üblicherweise von 20 : 1 bis 1 : 1 , vorzugsweise von 15 : 1 bis 3 : 2, speziell bevorzugt von 10 : 1 bis 4 : 1.

Bevorzugte Glykolether sind Glykolether, deren Reste R¹ bis R⁷ unabhängig von einander Wasserstoff und Alkylgruppen bedeuten. Bevorzugte Alkylgruppen sind C₁ bis C₄-Alkylgruppen, insbesondere C₁ und C₂ Alkylgruppen, stark bevorzugte Alkylgruppen sind Methylgruppen.

Trotz eines hohen Gehaltes an Füllstoffen und/oder Pigmenten werden mit dieser Zusammensetzung, im Vergleich zu herkömmlichen Schichten mit solchen Füllstoffen und/oder Pigmenten, hohe Glanzwerte erreicht.

Durch die erfindungsgemässe Zusammensetzung lassen sich, im Vergleich zu solchen Schichten, die keine Glykolether der Struktur (I) enthalten, mit deutlich niedrigeren Schichtdicken bzw. mit deutlich niedrigerer Auftragsmenge auf den Träger resp. niedrigerem Feststoffauftrag auf dem Träger, sehr kurze Trocknungszeiten der auf solche Schichten aufgetragenen Flüssigkeiten erreichen. Zudem lässt sich die Qualität der Beschichtung in Hinsicht auf Glanz und rissige Oberflächenstrukturen als Folge der Trocknung bei der Schichtherstellung signifikant verbessern. Farbaufnahmematerialien, die mindestens eine solche Aufnahmeschicht und einen Träger umfassen sind von dieser Erfindung miterfasst.

Ein weiterer Gegenstand der vorliegenden Erfindung ist ein Verfahren zur Erhöhung der Porosität respektive zur Reduktion der Schichtdicke, einer auf einen Träger aufgetragenen Schicht, das dadurch gekennzeichnet ist, dass der zur Herstellung der Schicht verwendeten Zusammensetzung, die Füllstoffe und/oder Pigmente (insbesondere feinteilige Füllstoffe und/oder Pigmente), Bindemittel mit Hydroxylgruppen und/oder Carboxylgruppen und/oder Estergruppen und Lösungsmittel umfasst, ein Glykolether der Formel (I) zugesetzt wird.

Insbesondere betrifft die Erfindung das Gebiet der Aufnahmeschichten für Farbflüssigkeiten, die bei Druckbildaufzeichnungsverfahren (Offset-, Tief-, Hoch-, Tintenstrahldruck, Elektrofotografie mit Flüssig- resp. Trockentoner) zur Anwendung kommen.

Ziel eines Druckes ist die Anpassung der Bildqualität des Ausdruckes an das Niveau der Silbersalzfotografie. An die verwendeten Aufzeichnungsmaterialien werden deshalb hohe Anforderungen gestellt. Hierzu gehören beispielsweise hohe Auflösung, hohe Farbdichte des erzeugten Bildes, kein Farbverlaufen ("bleeding"), sehr kurze Trocknungszeiten der Farbflüssigkeit, Lichtstabilität, Wasserfestigkeit, Brillanz, Dimensionsstabilität (Planlage) und Glanz.

Um derartige Eigenschaften zu bekommen, ist es nötig, eine Schicht mit einer hohen Farbflüssigkeitsaufnahme herzustellen. Durch die hohe Farbflüssigkeitsaufnahme verbessert sich die Bildauflösung wegen des verminderten Farbverlaufens und des schnellen Eindringens der Farbflüssigkeit in die Schicht.

Bevorzugte Glykolether mit der Struktur (I) sind jene, in denen R¹, R², R³, R⁷ und n wie oben angegeben sind und in denen R⁴, R⁵ und R⁶ Wasserstoff und m = 1 bis 3 bedeuten.

Bevorzugte feinteilige Füllstoffe sind anorganische und/oder organische Füllstoffe mit Teilchengrössen unter 0.2 *µ*m. Speziell bevorzugt sind anorganische Füllstoffe vom Typ Aluminimoxyd, Aluminiumoxidhydroxid (z.B. Aluminiumoxidhydroxid Monohydrat, Bohemit-Struktur) und/oder Silikate, insbesondere mit Teilchengrösse unter 0.1 *µ*m. Bevorzugt sind Füllstoffe resp. Pigmente mit hoher innerer Oberfläche.

Bevorzugte Bindemittel mit Carboxyl- und/oder Hydroxyl- und/oder Ester-Gruppen sind nicht oder teilveresterte Polyvinylalkohole und deren Copolymere. Speziell bevorzugt sind nicht oder teilveresterte Polyvinylalkohol-Homopolymere. Bevorzugte Teilester sind Acetate.

Bei einem Füllstoff/Bindemittel-Verhältnis über 12:1 lassen sich, z.B. bei Zusatz von 18 Gew.-% Glykolether der Formel (I) bezogen auf die flüssigen Bestandteile, Auftragsmengen deutlich unter 20 g/m² erreichen ohne dass das Farbaufnahmevermögen der Farbflüssigkeitsaufnahmeschicht gegenüber konventionellen "dicken" Schichten vermindert wäre. Übliche Verhältnisse Füllstoff/Bindemittel, die mit der erfindungsgemässen Zusammensetzung realisierbar sind, liegen im Bereich von 20:1 bis 1:1, insbesondere 15:1 bis 1:1, und übliche Schichtdicken liegen im Bereich von 5 bis 50 g/m², insbesondere 10-30 g/m². Als Träger eignen sich alle Kunststoffolien, Metallfolien, Papiere, Kunststoff-Vliese, Naturfaser-Vliese, Gewebe und mehrschichtige Materialien aus Lagen gleicher oder verschiedener Materialien.

Verbindungen der Formel(I) werden in der Lakkindustrie als Dampfregulator eingesetzt, um die Trocknungskinetik unter Kontrolle zu halten. Überraschenderweise führen sie in Zusammensetzungen, die spezielle Bindemittel sowie Füllstoffe und/oder Pigmente enthalten, insbesondere feinteilige Füllstoffe und/oder Pigmente, zu einer signifikant erhöhten Porosität in der Schicht. Dies kann möglicherweise, ohne dass dadurch die Erfindung aber in irgendeiner Form beschränkt werden soll, durch eine Art Komplexierung der eingesetzten feinteiligen Füllstoffe resp. Pigmente infolge des Glykoletherzusatzes erklärt werden und/oder durch langsames Ausfällen des im Lösungsmittel gut, im Glykolether der Formel (I) eher schlecht löslichen Bindemittels infolge der Anreicherung von Glykolether in der flüssigen Phase bei der Trocknung.

Neben der sehr porösen Struktur in der Schicht resultiert mit der erfindungsgemässen Zusammensetzung eine sehr glatte, hochglänzende und rissfreie Oberfläche der Beschichtung.

Durch den Zusatz von Glykolether wird auch die Giessbarkeit der Zusammensetzung, insbesondere die Gleichmässigkeit der Oberfläche und des Auftrages verbessert. Die Glykolether-haltigen Schichten können auf verschiedene Weisen auf ein Trägermaterial aufgetragen werden, insbesondere durch Walzenautrag, Auftrag einer Streichmasse mit dem Rakel, Begussverfahren etc. Für mehrschichtigen Auftrag werden Begussverfahren bevorzugt. Die Schicht kann gegebenenfalls vernetzt werden, und/oder nach der Beschichtung mechanisch, z.B. durch Kalandrieren mit Hochglanz- resp. entsprechend strukturierten Walzen oder Zylindern, behandelt werden, um die physikalischen Eigenschaften der Schichtoberfläche, wie z.B. das gewünschte Glanzniveau, einzustellen.

Ferner liegt es auch im Rahmen dieser Erfindung ein Farbaufnahmematerial mit mehr als einer Farbflüsigkeitsaufnahmeschicht auszustatten, wie z.B. mit unterschiedlich gefüllten resp. pigmentierten Schichten oder unterschiedlich porösen Schichten.

Die Erfindung wird in der Folge durch Beispiele näher erläutert. Diese Beispiele betreffen lediglich spezielle Ausführungsformen und sollen die Erfindung in keiner Weise beschränken.

### Beispiele

Als Trägermaterial für die nachfolgenden beschriebenen Beispiele wurde ein gestrichenes Papier oder eine Folie verwendet.

### Beispiel 1 (Vergleich)

### Zusammensetzung der Beschichtungsdispersion

| | |
|---|---|
| AlO(OH)-H₂O, Bohemit-Struktur (20% Dispersion in Wasser) | 100 Gewichtsteile |
| Polyvinylalkohol, hochmolekular (8% in Wasser) | 25 Gewichtsteile |
| Zonyl® FSN | 0.4 Gewichtsteile |
| Glyoxal | 2 Gewichtsteile |

Bei Zonyl® FSN und Glyoxal handelt es sich um ein Netzmittel resp. ein Vernetzungsmittel.

Auf einen Träger wird die obige Zusammensetzung in einer Menge, die einer Feststoffmenge von 25 g/m² entspricht, mittels Tauchverfahren aufgetragen. Die Schicht wird anschliessend im Trocknungskanal bei einem eingestellten Temperaturprofil zwischen 50°C-150°C innerhalb von 2 Minuten getrocknet.

### Beispiel 2 (Erfindungsgemäss)

Die Zusammensetzung von Beispiel 1 wurde zusätzlich mit 20 Gewichtsteilen Dipropylenglykolmethylether

CH₃-O-[CH₂CH(CH₃)O]₂-H

versetzt.

Die Beschichtung wurde wie in Beispiel 1 beschrieben mit einer Auftragsmenge von 25 g/m² durchgeführt.

### Beispiel 3 (Erfindungsgemäss)

Die Zusammensetzung von Beispiel 1 wurde mit 20 Gewichtsteilen Tripropylenglykolmethylether

CH₃-O-[CH₂CH(CH₃)O]₃-H

versetzt.

Die Beschichtung wurde wie in Beispiel 1 beschrieben mit einer Auftragsmenge von 25 g/m² durchgeführt.

### Beispiel 4 (Erfindungsgemäss)

Die Zusammensetzung von Beispiel 1 wurde mit 20 Gewichtsteilen 3-Methoxy-3-methyl-1-butanol

CH₃-O-C(CH₃)₂-[CH₂CH₂O]-H

versetzt.

Die Beschichtung wurde wie in Beispiel 1 beschreiben mit einer Auftragsmenge von 25 g/m² durchgeführt.

### Beispiel 5 (Vergleich mit hohem Auftrag)

Die Zusammensetzung von Beispiel 1 wurde verwendet.

Die Beschichtung wurde wie in Beispiel 1 durchgeführt, aber mit einer Auftragsmenge von 45 g/m².

### Durchgeführte Untersuchungen

In den folgenden Versuchen wurde ein EPSON STYLUS Photo 750-Tintenstrahldrucker mit handelsüblichen Tinten als Testgerät eingesetzt. Ein Bild mit verschiedenen Feldern in den Farben Schwarz, Cyan, Gelb, Magenta, Rot, Blau und Grün wurde auf die in den Beispielen 1 bis 5 hergestellten Muster aufgedruckt.

*Der (Schicht-)Auftrag* auf jedem Muster wurde gravimetrisch durch Abzug des Gewichtes des Rohträgers bestimmt.

*Die Bildqualität* wurde anhand der bedruckten Bilder eingeschätzt, indem die Schärfe von feinen Linien optisch ausgewertet wurde.

*Der Farbverlauf* wurde anhand der angrenzenden bedruckten Farbfelder optisch ausgewertet: Die Einstufung ist
stark = die Farben mischen sich stark ineinander
mittelmässig = die Farben mischen sich mittelmässig ineinander
kein = die Farben mischen sich nicht ineinander.

*Die Oberflächenstruktur* wurde am Mikroskop hinsichtlich Rissbildung untersucht.

*Die Soforttrocknung* der Muster wurde ausgewertet, indem das bedruckte Material mit einem Finger sofort nach Bedruckung abgerieben wurde. Wenn sofort nach Bedrucken kein Verwischen eintrat, wurde das Material als sofort getrocknet eingestuft.

*Die Glanzmessung* der Muster wurde mit einem Glanzmessgerät der Fa. Dr. Bruno Lange GmbH, Düsseldorf DE, bei einem Winkel von 20° durchgeführt.

*Die Wasserfestigkeit* des Materials wurde 24 Stunden nach Bedrucken ausgewertet, indem ein Wassertropfen (0.3ml) auf jedes Farbfeld (Schwarz, Cyan, Gelb, Magenta, Rot, Blau und Grün) gegeben wurde. Nach 1 Minute wurde das liegende Wasser mit einem Wischtuch entfernt. Die Wasserfestigkeit wurde als sehr gut eingestuft, wenn die Farbfelder unberührt bleiben d.h. keine Farbe abgewischt wurde.

| **Beispiel** | **Auftrag g/m2** | **Bildqualität** | **Verlauf** | **Oberfläche Struktur** | **Sofort Trocknung** | **Glanz** | **Wasserfestigkeit** |
|---|---|---|---|---|---|---|---|
| 1 | 25 | schlecht | stark | Risse | n. getrocknet | 12 | sehr gut |
| 2 | 25 | sehr gut | kein | glatt, glänzend | getrocknet | 17 | sehr gut |
| 3 | 25 | sehr gut | kein | glatt, glänzend | getrocknet | 19 | sehr gut |
| 4 | 25 | sehr gut | kein | glatt, glänzend | getrocknet | 16 | sehr gut |
| 5 | 45 | sehr gut | kein | Risse | getrocknet | 12 | sehr gut |

Man erkennt eindeutig, dass die mit den Glykolethern hergestellten Muster 2,3 und 4 deutlich bessere Eigenschaften in Hinsicht auch Bildqualität, Verlauf, Oberflächenstruktur und Tintensoforttrocknung bei niedrigerer Auftragsmenge im Vergleich mit den Referenzmustern 1 und 5 aufweisen.

## Patentansprüche

1. Farbaufnahmematerial mit einem Träger und mindestens einer Farbflüssigkeitsaufnahmeschicht, **dadurch gekennzeichnet, dass** mindestens eine Farbflüssigkeitsaufnahmeschicht herstellbar ist durch Beschichtung des Trägers mit einer Zusammensetzung enthaltend
(i) mindestens einen Glykolether der Formel (I) 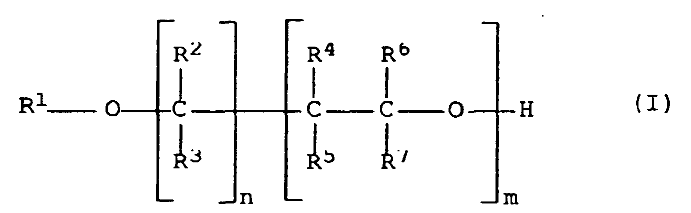 worin R¹,R²,R³,R⁴,R⁵,R⁶,R⁷ unabhängig von einander H, einen Alkylrest, insbesondere einen C₁-C₄₋Alkylrest, einen Phenylrest oder einen Benzylrest bedeuten und
n = 0, 1 oder 2 und
m = 1-10 sind, sowie
(ii) mindestens einen feinteiligen Füllstoff und/oder mindestens ein feinteiliges Pigment
(iii) mindestens ein Bindemittel mit Hydroxylgruppen und/oder Carboxylgruppen und/oder Estergruppen und
(iv) mindestens ein Lösungsmittel, wobei das Bindemittel im Lösungsmittel mindestens teilweise löslich ist und wobei das Lösungsmittel einen Siedepunkt unterhalb des Siedepunkts des Glykolethers der Formel (I) aufweist,
und dass durch anschliessende Trocknung mindestens 50 % des ursprünglichen Gehalts an Glykolether der Formel (I) entfernt wurden.

2. Farbaufnahmematerial gemäss Anspruch 1, **dadurch gekennzeichnet, dass** die Zusammensetzung Feststoffe in Mengen von 8 bis 40 Gew.-%, und flüssige Bestandteile in Mengen von 92 bis 60 Gew.-% umfasst.

3. Farbaufnahmematerial gemäss Anspruch 1 oder 2, **dadurch gekennzeichnet, dass** die Zusammensetzung Feststoffe in Mengen von 10 bis 30 Gew.-% und flüssige Bestandteile in Mengen von 90 bis 70 Gew.-% umfasst.

4. Farbaufnahmematerial gemäss einem der Ansprüche 1 bis 3, **dadurch gekennzeichnet, dass** in der Zusammensetzung das Verhältnis von Lösungsmittel zu Glykolether der Formel (I) von 20 : 1 bis 1 : 1 beträgt.

5. Farbaufnahmematerial gemäss einem der Ansprüche 1 bis 4, **dadurch gekennzeichnet, dass** in der Zusammensetzung das Verhältnis von Lösungsmittel zu Glykolether der Formel (I) von 15 : 1 bis 3 : 2 beträgt.

6. Farbaufnahmematerial gemäss einem der Ansprüche 1 bis 5, **dadurch gekennzeichnet, dass** in der Zusammensetzung das Mengenverhältnis Füllstoff zu Bindemittel 20:1 bis 1:1 beträgt.

7. Farbaufnahmematerial gemäss einem der Ansprüche 1 bis 6, **dadurch gekennzeichnet, dass** in der Zusammensetzung das Mengenverhältnis Füllstoff zu Bindemittel 15:1 bis 1:1 beträgt.

8. Farbaufnahmematerial gemäss einem der Ansprüche 1 bis 7, **dadurch gekennzeichnet, dass** der mindestens eine Füllstoff und/oder das mindestens eine Pigment eine Teilchengrösse von <0.2µm aufweist.

9. Farbaufnahmematerial gemäss einem der Ansprüche 1 bis 8, **dadurch gekennzeichnet, dass** der mindestens eine feinteilige Füllstoff Aluminiumoxid und/oder Kieselsäure ist.

10. Farbaufnahmematerial gemäss einem der Ansprüche 1 bis 9, **dadurch gekennzeichnet, dass** der mindestens eine feinteilige Füllstoff Aluminiumoxidhydroxid ist.

11. Farbaufnahmematerial gemäss Anspruch 10, **dadurch gekennzeichnet, dass** das Aluminiumoxidhydroxid Aluminiumoxidhydroxid Monohydrat mit Boehmit-Struktur ist.

12. Farbaufnahmematerial gemäss einem der Ansprüche 1 bis 11, **dadurch gekennzeichnet, dass** der Glykolether ein Glykolether der Formel (I) ist, worin R¹, R², R³, R⁷ und n wie oben angegeben sind und R⁴, R⁵ und R⁶ Wasserstoff und m = 1 bis 3, bedeuten.

13. Farbaufnahmematerial gemäss einem der Ansprüche 1 bis 12, **dadurch gekennzeichnet, dass** das Bindemittel ein Polyvinylalkohol ist.

14. Farbaufnahmematerial gemäss einem der Ansprüche 1 bis 13, **dadurch gekennzeichnet, dass** das Lösungsmittel ein polares Lösungsmittel mit Siedepunkt unterhalb des Siedepunkts des Glykolethers der Formel (I) ist.

15. Farbaufnahmematerial gemäss einem der Ansprüche 1 bis 14, **dadurch gekennzeichnet, dass** das Lösungsmittel ein polares Lösungsmittel ist, das ausgewählt ist aus der Gruppe bestehend aus Alkoholen, Wasser und Mischungen derselben.

16. Farbaufnahmematerial gemäss einem der Ansprüche 1 bis 15, **dadurch gekennzeichnet, dass** das Bindemittel im Lösungsmittel vollständig löslich ist.

17. Farbaufnahmematerial gemäss einem der Ansprüche 1 bis 16, **dadurch gekennzeichnet, dass** der Glykolether der Formel (I) zu mindestens 70 % seines ursprünglichen Gehalts entfernt wurde.

18. Farbaufnahmematerial gemäss einem der Ansprüche 1 bis 17, **dadurch gekennzeichnet, dass** der Träger eine Kunststoffolie, eine Metallfolie, Papier, ein Kunststoff-Vlies, ein Naturfaser-Vlies, ein Gewebe oder ein mehrschichtiges Material aus Lagen gleicher oder verschiedener Materialien ist.

19. Farbaufnahmematerial gemäss einem der Ansprüche 1 bis 18, **dadurch gekennzeichnet, dass** die Trocknung in einem Trocknungskanal bei Temperaturen zwischen 50°C und 200°C während 1-4 Minuten erfolgt.

20. Farbaufnahmematerial gemäss einem der Ansprüche 1 bis 19, **dadurch gekennzeichnet, dass** bei der Trocknung mindestens 90 % des Lösungsmittels entfernt wurden.

21. Farbaufnahmematerial gemäss einem der Ansprüche 1 bis 20, **dadurch gekennzeichnet, dass** bei der Trocknung 100 % des Lösungsmittels entfernt wurden.

22. Farbaufnahmematerial gemäss einem der Ansprüche 1 bis 21, **dadurch gekennzeichnet, dass** es mindestens zwei Farbflüssigkeitsaufnahmeschichten aufweist.

23. Verwendung einer Zusammensetzung, wie in einem der Ansprüche 1 bis 16 definiert, zur Herstellung eines Farbaufnahmematerials gemäss einem der Ansprüche 1 bis 22.

24. Verfahren zur Herstellung eines Farbaufnahmematerials gemäss einem der Ansprüche 1 bis 22, **dadurch gekennzeichnet, dass** auf einen Träger eine Schicht aus einer Zusammensetzung, wie in einem der Ansprüche 1 bis 16 definiert, aufgetragen und die Schicht anschliessend getrocknet wird, wobei mindestens 50 % des Glykolethers der Formel (I) entfernt werden.

25. Verfahren gemäss Anspruch 24, **dadurch gekennzeichnet, dass** die Trocknung in einem Trocknungskanal bei Temperaturen zwischen 50°C und 200°C während 1-4 Minuten erfolgt.

26. Verfahren gemäss Anspruch 24 oder 25, **dadurch gekennzeichnet, dass** die Oberfläche der Farbflüssigkeitsaufnahmeschicht nach der Beschichtung mechanisch geglättet oder strukturiert wird.

27. Verfahren zur Erhöhung der Porosität resp. zur Reduktion der Schichtdicke einer auf einen Träger aufgebrachten Farbflüssigkeitsaufnahmeschicht, **dadurch gekennzeichnet, dass** einer Zusammensetzung enthaltend mindestens einen feinteiligen Füllstoff und/oder mindestens ein feinteiliges Pigment, mindestens ein Bindemittel mit Hydroxylgruppen und/oder Carboxylgruppen und/oder Estergruppen und mindestens ein Lösungsmittel, wobei das Bindemittel im Lösungsmittel mindestens teilweise löslich ist und wobei das Lösungsmittel einen Siedepunkt Unterhalb des Siedepunkts des Glykolesters der Formel (I) aufweist, und mindestens ein Glykolether der Formel (I) zugesetzt wird, und dass anschliessend mindestens 50 % des Glykolethers der Formel (I) entfernt werden.

28. Verwendung von Glykolether der Formel (I) zur Erhöhung der Porosität resp. zur Reduktion der Schichtdicke einer auf einen Träger aufgebrachten Farbflüssigkeitsaufnahmeschicht mit einer Zusammensetzung enthaltend mindestens einen feinteiligen Füllstoff und/oder mindestens ein feinteiliges Pigment, mindestens ein Bindemittel mit Hydroxylgruppen und/oder Carboxylgruppen und/oder Estergruppen und mindestens ein Lösungsmittel, wobei das Bindemittel im Lösungsmittel mindestens teilweise löslich ist und wobei das Lösungsmittel einen Siedepunkt Unterhalb des Siedepunkts des Glykolesters der Formel (I) aufweist.

## Claims

1. Colour absorbing material with a carrier and at least one coloured liquid absorbing layer, **characterised in that** at least one coloured liquid absorbing layer is producible by coating the carrier with a composition containing
(i) at least one glycol ether of formula (I) 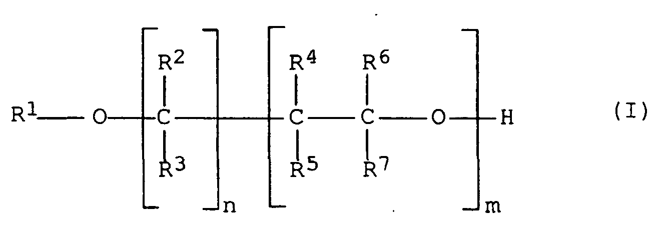 wherein R¹,R²,R³,R⁴,R⁵,R⁶,R⁷ independently from each other signify H, an alkyl group, in particular a C₁-C₄-alkyl group, a phenyl group or a benzyl group, and
n is 0, 1 or 2 and
m is 1-10, as well as
(ii) at least one finely divided filler and/or at least one finely divided pigment,
(iii) at least one binder with hydroxyl groups and/or carboxyl groups and/or ester groups, and
(iv) at least one solvent, whereby the binder is at least partially soluble in said solvent, and wherein said solvent has a boiling point below the boiling point of the glycol ether of formula (I),
and **in that** by the subsequent drying at least 50 % of the original content of the glycol ether of formula (I) have been removed.

2. Colour absorbing material according to claim 1, **characterised in that** the composition comprises solids in amounts of 8 to 40 % by weight, and liquid constituents in amounts of 92 to 60 % by weight.

3. Colour absorbing material according to claim 1 or 2, **characterised in that** the composition comprises solids in amounts of 10 to 30 % by weight, and liquid constituents in amounts of 90 to 70 % by weight.

4. Colour absorbing material according to anyone of claims 1 to 3, **characterised in that** in the composition the ratio of solvent to glycol ether of formula (I) is from 20 : 1 to 1 : 1.

5. Colour absorbing material according to anyone of claims 1 to 4, **characterised in that** in the composition the ratio of solvent to glycol ether of formula (I) is from 15 : 1 to 3 : 2.

6. Colour absorbing material according to anyone of claims 1 to 5, **characterised in that** in the composition the mass ratio of filler to binder is from 20:1 to 1:1.

7. Colour absorbing material according to anyone of claims 1 to 6, **characterised in that** in the composition the mass ratio of filler to binder is from 15:1 to 1:1.

8. Colour absorbing material according to anyone of claims 1 to 7, **characterised in that** the at least one filler and/or the at least one pigment have a particle size of <0.2µm.

9. Colour absorbing material according to anyone of claims 1 to 8, **characterised in that** the at least one finely divided filler is aluminium oxide and/or silicic acid.

10. Colour absorbing material according to anyone of claims 1 to 9, **characterised in that** the at least one finely divided filler is aluminium oxide hydroxide.

11. Colour absorbing material according to claim 10, **characterised in that** the aluminium oxide hydroxide is aluminium oxide hydroxide monohydrate in the Boehmit form.

12. Colour absorbing material according to anyone of claims 1 to 11, **characterised in that** the glycol ether is a glycol ether of formula (I), wherein R¹, R², R³, R⁷ and n are as mentioned above and R⁴, R⁵ and R⁶ are hydrogen and m = 1 to 3.

13. Colour absorbing material according to anyone of claims 1 to 12, **characterised in that** the binder is a polyvinyl alcohol.

14. Colour absorbing material according to anyone of claims 1 to 13, **characterised in that** the solvent is a polar solvent with boiling point below the boiling point of the glycol ether of formula (I).

15. Colour absorbing material according to anyone of claims 1 to 14, **characterised in that** the solvent is a polar solvent selected from the group consisting of alcohols, water and mixtures thereof.

16. Colour absorbing material according to anyone of claims 1 to 15, **characterised in that** the binder is entirely soluble in the solvent.

17. Colour absorbing material according to anyone of claims 1 to 16, **characterised in that** the glycol ether of formula (I) has been removed to at least 70 % of its original content.

18. Colour absorbing material according to anyone of claims 1 to 17, **characterised in that** the carrier is a plastics foil, a metal foil, paper, non-woven plastics, non-woven natural fibres, a fabric or a multilayer material comprising several layers of identical or different materials.

19. Colour absorbing material according to anyone of claims 1 to 18, **characterised in that** the drying is performed in a drying channel for 1-4 minutes at temperatures between 50°C and 200°C.

20. Colour absorbing material according to anyone of claims 1 to 19, **characterised in that** during the drying at least 90 % of the solvent has been removed.

21. Colour absorbing material according to anyone of claims 1 to 20, **characterised in that** during the drying 100 % of the solvent have been removed.

22. Colour absorbing material according to anyone of claims 1 to 21, **characterised in that** it comprises at least two coloured liquid absorbing layers.

23. Use of a composition as defined in one of claims 1 to 16 for the production of a colour absorbing material according to anyone of claims 1 to 22.

24. Method for the production of a colour absorbing material according to anyone of claims 1 to 22, **characterised in that** a layer with a composition as defined in one of claims 1 to 16 is applied to a carrier and that the layer is then dried, whereby at least 50 % of the glycol ether of formula (I) are removed.

25. The method according to claim 24, **characterised in that** the drying is performed in a drying channel for 1-4 minutes at temperatures between 50°C and 200°C.

26. The method of claim 24 or 25, **characterised in that** after the coating the surface of the coloured liquid absorbing layer is mechanically smoothened or structured.

27. A method for enhancing the porosity or for reducing the layer thickness of a coloured liquid absorbing layer applied to a carrier, **characterised in that** at least one glycol ether of formula (I) is added to a composition containing at least one finely divided filler and/or at least one finely divided pigment, at least one binder with hydroxyl groups and/or carboxyl groups and/or ester groups and at least one solvent, wherein the binder is at least partially soluble in the solvent, and wherein the solvent has a boiling point below the boiling point of the glycol ether of formula (I), and that subsequently at least 50 % of the glycol ether of formula (I) are removed.

28. Use of a glycol ether of formula (I) for enhancing the porosity or for reducing the layer thickness, respectively, of a coloured liquid absorbing layer applied to a carrier and having a composition containing at least one finely divided filler and/or at least one finely divided pigment, at least one binder with hydroxyl groups and/or carboxyl groups and/or ester groups and at least one solvent, wherein the binder is at least partially soluble in the solvent, and wherein the solvent has a boiling point below the boiling point of the glycol ether of formula (I).

## Revendications

1. Matériau de prélèvement tinctorial avec un support et au moins une couche de prélèvement de liquide tinctorial, **caractérisé en ce que** au moins une couche de prélèvement de liquide tinctorial est réalisable par le revêtement du support avec une composition contenant
(i) au moins un glycoléther de formule (I) 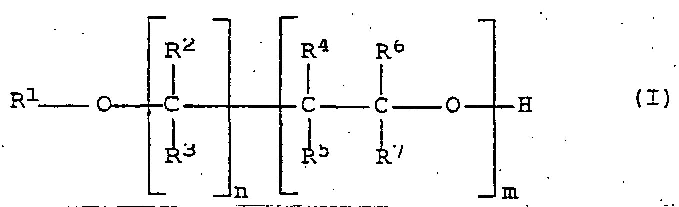 où R¹ R², R³, R⁴, R⁵, R⁶, R⁷ désignent
indépendamment les uns des autres H, un radical alcoyl, en particulier un radical alcoyl C₁-C₄, un radical phényle ou un radical benzyle et
n = 0, 1 ou 2, et
m = 1-10, ainsi que
(ii) au moins une charge finement divisée et/ou au moins un pigment finement divisé
(iii) au moins un liant avec des groupes hydroxyles et/ou des groupes carboxyles et/ou des groupes esters et
(iv) au moins un solvant, le liant étant au moins partiellement soluble dans le solvant, et le solvant présentant un point d'ébullition au-dessous du point d'ébullition du glycoléther de formule (I),
et **en ce que**, par un séchage consécutif, au moins 50 % de la teneur initiale en glycoléther de la formule (I) ont été éliminés.

2. Matériau de prélèvement tinctorial selon la revendication 1, **caractérisé en ce que** la composition englobe des matières solides à raison de quantités de 8 à 40 %-poids, et des composants liquides à raison de quantités de 93 à 60 %-poids.

3. Matériau de prélèvement tinctorial selon la revendication 1 ou 2, **caractérisé en ce que** la composition englobe des matières solides à raison de quantités de 10 à 30 %-poids, et des composants liquides à raison de quantités de 90 à 70 %-poids.

4. Matériau de prélèvement tinctorial selon une des revendications 1 à 3, **caractérisé en ce que**, dans la composition, le rapport du solvant au glycoléther de formule (I) représente 20 : 1 à 1 : 1.

5. Matériau de prélèvement tinctorial selon une des revendications 1 à 4, **caractérisé en ce que**, dans la composition, le rapport du solvant au glycoléther de formule (I) représente 15 : 1 à 3 : 2.

6. Matériau de prélèvement tinctorial selon une des revendications 1 à 5, **caractérisé en ce que**, dans la composition, le rapport quantitatif de la charge au liant représente 15 : 1 à 1 : 1.

7. Matériau de prélèvement tinctorial selon une des revendications 1 à 6, **caractérisé en ce que**, dans la composition, le rapport quantitatif de la charge au liant représente 15:1 à 1:1.

8. Matériau de prélèvement tinctorial selon une des revendications 1 à 7, **caractérisé en ce que** la charge, au moins au nombre de un, et/ou le pigment, au moins au nombre de un, présente une taille de particules de < 0,2 µm.

9. Matériau de prélèvement tinctorial selon une des revendications 1 à 8, **caractérisé en ce que** la charge finement divisée, au moins au nombre de un, est de l'oxyde d'aluminium et/ou de l'anhydride silicique.

10. Matériau de prélèvement tinctorial selon une des revendications 1 à 9, **caractérisé en ce que** la charge finement divisée, au moins au nombre de un, est de l'hydroxyde oxyde d'aluminium.

11. Matériau de prélèvement tinctorial selon la revendication 10, **caractérisé en ce que** l'hydroxyde oxyde d'aluminium est un monohydrate d'hydroxyde oxyde d'aluminium avec une structure de boehmite.

12. Matériau de prélèvement tinctorial selon une des revendications 1 à 11, **caractérisé en ce que** le glycoléther est un glycoléther de formule (I), où R¹, R², R³, R⁷ et n sont comme indiqués plus haut, et R⁴, R⁵ et R⁶ désignent de l'hydrogène et m=1 à 3.

13. Matériau de prélèvement tinctorial selon une des revendications 1 à 12, **caractérisé en ce que** le liant est un alcool de polyvinyle.

14. Matériau de prélèvement tinctorial selon une des revendications 1 à 13, **caractérisé en ce que** le solvant est un solvant polaire dont le point d'ébullition est inférieur au point d'ébullition du glycoléther de formule (I).

15. Matériau de prélèvement tinctorial selon une des revendications 1 à 14, **caractérisé en ce que** le solvant est un solvant polaire qui est sélectionné dans le groupe composé d'alcools, d'eau et de mélanges de ceux-ci.

16. Matériau de prélèvement tinctorial selon une des revendications 1 à 15, **caractérisé en ce que** le liant est totalement soluble dans le solvant.

17. Matériau de prélèvement tinctorial selon une des revendications 1 à 16, **caractérisé en ce que** le glycoléther de formule (I) a été éliminé à raison d'au moins 70 % de sa teneur initiale.

18. Matériau de prélèvement tinctorial selon une des revendications 1 à 17, **caractérisé en ce que** le support est une feuille de matière plastique, une feuille métallique, du papier, un voile de matière plastique, un voile de fibres naturelles, un tissu ou un matériau multicouche constitué de couches de matériaux identiques ou différents.

19. Matériau de prélèvement tinctorial selon une des revendications 1 à 18, **caractérisé en ce que** le séchage est effectué dans une gaine de séchage à des températures entre 50 °C et 200 °C pendant 1 à 4 minutes.

20. Matériau de prélèvement tinctorial selon une des revendications 1 à 19, **caractérisé en ce que**, lors du séchage, au moins 90 % du solvant ont été éliminés.

21. Matériau de prélèvement tinctorial selon une des revendications 1 à 20, **caractérisé en ce que**, lors du séchage, 100 % du solvant ont été éliminés.

22. Matériau de prélèvement tinctorial selon une des revendications 1 à 21, **caractérisé en ce qu'**il présente au moins deux couches de prélèvement de liquide tinctorial.

23. Utilisation d'une composition, selon la définition dans une des revendications 1 à 16, pour la réalisation d'un matériau de prélèvement tinctorial selon une des revendications 1 à 22.

24. Procédé de réalisation d'un matériau de prélèvement tinctorial selon une des revendications 1 à 22, **caractérisé en ce qu'**une couche, réalisée dans une composition telle que définie dans une des revendications 1 à 16, est appliquée sur un support, et **en ce que** la couche est ensuite séchée, au moins 50 % du glycoléther de formule (I) étant éliminés.

25. Procédé selon la revendication 24, **caractérisé en ce que** le séchage est effectué dans une gaine de séchage à des températures entre 50 °C et 200 °C pendant 1 à 4 minutes.

26. Procédé selon la revendication 24 ou 25, **caractérisé en ce que** la surface de la couche de prélèvement de liquide tinctorial est, après le revêtement, lissée ou structurée mécaniquement.

27. Procédé pour respectivement augmenter la porosité ou pour réduire l'épaisseur de couche d'une couche de prélèvement de liquide tinctorial mise en place sur un support, **caractérisé en ce que**, à une composition contenant au moins une charge finement divisée et/ou au moins un pigment finement divisé, au moins un liant avec des groupes hydroxyles et/ou des groupes carboxyles et/ou des groupes esters et au moins un solvant, le liant étant au moins partiellement soluble dans le solvant, et au moins un glycoléther de formule (I) est ajouté, et **en ce que** ensuite au moins 50 % du glycoléther de formule (1) sont éliminés.

28. Utilisation du glycoléther de formule (I) pour respectivement augmenter la porosité ou pour réduire l'épaisseur de couche d'une couche de prélèvement de liquide tinctorial mise en place sur un support, avec une composition contenant au moins une charge finement divisée et/ou au moins un pigment finement divisé, au moins un liant avec des groupes hydroxyles et/ou des groupes carboxyles et/ou des groupes esters et au moins un solvant, le liant étant au moins partiellement soluble dans le solvant, et le solvant présentant un point d'ébullition inférieur au point d'ébullition du glycoléther de formule (I).
